# EUROPEAN PATENT SPECIFICATION

(11) **EP 2 510 796 B1**
(45) Date of publication and mention of the grant of the patent: **25.09.2013**
(21) Application number: 12163932.2
(22) Date of filing: 12.04.2012
(51) Int. Cl.: A23C 9/154

(54) **Foamable milk composition**
Aufschäumbare Milchzubereitung
Produit moussable à bas de lait

(30) Priority: 12.04.2011 JP 2011088367
(43) Date of publication of application: 17.10.2012
(73) Proprietor: Shin-Etsu Chemical Co., Ltd., Chiyoda-ku, Tokyo (JP)
(72) Inventor: Niinobe, Shingo, Joetsu-shi, Niigata (JP); Hayakawa, Kazuhisa, Joetsu-shi, Niigata (JP); Kuribayashi, Daisuke, Sakai-shi, Osaka (JP)
(74) Representative: Stoner, Gerard Patrick

(56) References cited:
- EP-A1- 0 885 566
- EP-A2- 1 212 946
- US-A- 3 076 709
- US-A1- 2007 065 555
- US-A1- 2007 071 874
- ZHAO Q ET AL: "Effect of hydroxypropyl methylcellulose on the textural and whipping properties of whipped cream", FOOD HYDROCOLLOIDS, ELSEVIER BV, NL, vol. 23, no. 8, 1 December 2009 (2009-12-01), pages 2168-2173, XP026603115, ISSN: 0268-005X, DOI: 10.1016/J.FOODHYD.2009.04.007 [retrieved on 2009-05-05]

## Description

### TECHNICAL FIELD

This invention relates to a foamable milk composition which is suitable as a food topping composition for forming a non-fat milk-containing foam, for example, forming a foam topping on cappuccino type coffee.

### BACKGROUND

Cappuccino is a cup of espresso coffee/milk drink topped with milk foam. The milk foam is produced by blowing steam around 70°C into milk by means of a steaming equipment for foaming, or by agitating hot milk around 60°C by means of a hand mixer or special agitator for entrapping air for foaming. Either procedure is very cumbersome. Thus there is a need for a composition capable of readily forming milk foam. It would be desirable to have a foamable milk composition capable of topping beverage and food items with a milk foam.

With respect to milk products from which creamers are made, there is a tendency to use low-fat milk products as a health care diet intended for cholesterol reduction and anti-obesity. In Japan, for example, the Ordinance of the Ministry of Health and Welfare No. 52 of 1951 relating to constituent standards of milk and milk products, for enforcement of the Food Sanitation Act, defines that among milk products in which only milk fat component is modified, those having a milk fat content of less than 0.5% by weight are classified as non-fat milk.

If an attempt is made to foam such non-fat milk by agitating with the above-mentioned steaming equipment, hand mixer, special agitator or the like, for entrapping air bubbles, the resulting foam consists of large size, short-lived bubbles and is far from the desired milk foam.

In this connection, JP-A H11-56233 (EP-A-0885566) discloses that a milk foam is formed by dissolving a spray-dried creamer comprising non-fat milk solids, coconut fat, sweet whey, glucose syrup, sucrose, and aroma substrate along with coffee powder. If desired, the creamer may also contain an emulsifier serving as a low-molecular-weight surfactant selected from monoglycerides, distilled monoglycerides, diglycerides, glycerol monostearates, sorbitol monostearates, esters or carbocyclic acids with mono- and di-glycerides, monosodium phosphate derivatives of mono- and di-glycerides, lecithin, diacetyl tartaric acid esters of mono- and di-glycerides (data esters), sorbitan esters, diacetyl tartaric acids esters of mono- and di-glycerides, succinylated mono- and di-glycerides, acetylated mono- and di-glycerides, hydroxylated lecithin, propylene glycol mono- and di-esters of fatty acids, polyglycerol esters of fatty acids, lactylic esters of fatty acids, and mixtures thereof. JP-A 2006-055167 discloses that a foam is readily formed from a powder composition containing such an emulsifier.

JP-A H10-150915 describes that a stable foam is formed from a composition comprising a natural polysaccharide such as guar gum, gum arabic or xanthane gum in addition to the emulsifier mentioned above. JP-A 2001-510344 (WO 98/34495) discloses preparation of foam from a powder composition comprising a bicarbonate salt to generate carbon dioxide and a natural gum as a thickener.

The milk foams produced by these methods, however, are large in bubble size, unstable, and thus less favorable as the milk foam on cappuccino. Although the addition of emulsifiers is effective for stabilizing the foam, the taste of the resulting milk foam is far from the desired taste because most emulsifiers taste very bitter and astringent. Some natural polysaccharides such as gums are devoid of the bitter taste problem, but have less surface activity. Then a foamable milk composition capable of forming a flowing foam topping is not obtained unless the emulsifier of bitter or astringent taste is added.

JP-A 2010-535491 (WO 2009/019486) discloses a convenient method of forming a creamy foam of low fat bubbles using a foam generator. A foam is produced using an aqueous or aqueous ethanolic solution of a surfactant having an HLB greater than 9. Further methyl cellulose or saponin may be added to the solution. It is described that methyl cellulose is preferable on flavor grounds, but gives a less satisfactory foam quality, when used alone. Thus a surfactant must be added. This has not fully solved the problem that foam has a bitter or astringent taste.

US-A-3076709 describes milk-based binding, thickening and stabilising agents for preparing food, or food dressings or toppings. They contain water-soluble non-ionic alkyl ethers of cellulose such as ethyl cellulose, methyl cellulose, methylethyl cellulose, hydroxypropyl methyl cellulose and hydroxyethyl cellulose. Hydroxypropyl methyl cellulose is used in examples which combine dried skim milk with hydroxypropyl methyl cellulose to make a food base formula.

US 2007/0065555 discloses a milk based foam containing hydroxypropyl methyl cellulose.

### THE INVENTION

An object of the invention is to provide a foamable milk composition which is suitable as a food topping composition for forming a non-fat milk-containing foam on demand, for example, forming a foam topping on beverages, typically coffee, and food items.

The inventors have found that a creamy foam of fine bubble size can be formed on top of coffee beverages or food items by dissolving hydroxypropyl methyl cellulose in non-fat milk, feeding the solution to a foam generator and dispensing therefrom, or agitating the solution by a foaming equipment.

Accordingly, the invention provides a foamable milk composition suitable for forming a non-fat milk-containing foam topping for food use

In one aspect, as specified in claim 1, the invention provides a foamable milk composition consisting of non-fat milk and hydroxypropyl methyl cellulose.

The hydroxypropyl methyl cellulose is a mixture of (A) hydroxypropyl methyl cellulose forming a 2 wt% aqueous solution having a viscosity of 3 to 10 mPa-s at 20°C and (B) hydroxypropyl methyl cellulose forming a 2 wt% aqueous solution having a viscosity of 50 to 4,000 mPa-s at 20°C. More preferably the mixture contains hydroxypropyl methyl celluloses (A) and (B) in a weight ratio between 0.1/1 and 1/0.1.

Another aspect is the use of such a composition to form a milk foam topping on a beverage or food item, as specified in claim 6.

### ADVANTAGEOUS EFFECTS

The foamable milk composition ensures that a milk foam is quickly prepared, on demand, as a topping on coffee and other beverages and food items. A non-fat milk-containing foam topping for food use is readily formed.

### FURTHER EXPLANATIONS; OPTIONS AND PREFERENCES

In Japan, the Ordinance of the Ministry of Health and Welfare No. 52 of 1951 relating to constituent standards of milk and milk products, for enforcement of the Food Sanitation Act, defines that among milk products in which only milk fat component is modified, those having a milk fat content of less than 0.5% by weight are classified as non-fat milk. As used herein, the term "non-fat milk" refers to dairy milk products having a milk fat content of less than 0.5% by weight, and non-dairy milk products of vegetable-based milk such as soymilk having a fat content of less than 0.5% by weight. A dispersion of skimmed milk powder or soymilk powder in water may also be used as the non-fat milk as long as the dispersion can be prepared as a solution having a fat content of less than 0.5% by weight. Notably, ordinary milk products having a high fat content can be readily foamed and stabilized as fine bubbles since the fat component has a sufficient surface activity. In contrast, those milk products with a low fat content as used herein are difficult to be foamed and stabilized.

Hydroxypropyl methyl cellulose used herein may have a methoxyl substitution of 19 to 32% by weight and a hydroxypropoxyl substitution of 4 to 12% by weight. The molecular substitution can be determined by the Zeisel-GC method based on the reference: J. G. Gobler, E. P. Samsel, and G. H. Beaber, Talanta, 9, 474 (1962). The substitution may also be determined by the gas chromatography method described in terms of methyl cellulose in the Japanese Standards of Food Additives and the method of determining a substitution of methyl cellulose and hydroxypropyl methyl cellulose as prescribed by the Pharmacopoeia of Japan. Cellulose is not water-soluble if the substitution is below the above-defined range and is difficult to dissolve if the substitution exceeds the above-defined range. Cellulose containing only methoxyl groups, which is referred to as methyl cellulose, is a cellulose ether different from hydroxypropyl methyl cellulose as used herein and has a lower surface activity than hydroxypropyl methyl cellulose. Thus methyl cellulose is not suitable for the object of the invention.

While an aqueous solution of hydroxypropyl methyl cellulose takes the non-flowing gel state in a temperature range from the gelation incipient temperature of 60°C, the solution keeps fluidity and exhibits good surface activity below the gelation incipient temperature. By contrast, methyl cellulose gels at about 30 to 55°C, losing fluidity. Accordingly, the use of hydroxypropyl methyl cellulose permits a foam of non-fat milk to be formed without a need for surfactants such as low-molecular-weight fatty acid glycerol esters, sucrose fatty acid esters and saponins.

Since hydroxypropyl methyl cellulose is a high-molecular-weight substance, it scarcely tastes bitter or astringent as opposed to low-molecular-weight surfactants such as low-molecular-weight fatty acid glycerol esters, sucrose fatty acid esters and saponins.

With respect to the degree of polymerization of hydroxypropyl methyl cellulose, a viscosity at 20°C of a 2 wt% aqueous solution of cellulose is used as an index of degree of polymerization. Most commercially available hydroxypropyl methyl celluloses form 2 wt% aqueous solutions having a viscosity of 3 to 300,000 mPa-s at 20°C and are useful.

For hydroxypropyl methyl cellulose forming a 2 wt% aqueous solution having a viscosity of less than or equal to 15 mPa-s at 20°C, a creamy foam of fine bubbles can be formed by a foam generator or mixer. With respect to the stability of foam, it is sometimes necessary to add a more amount of hydroxypropyl methyl cellulose in order that the foam remain stable for about 20 minutes since topping. For hydroxypropyl methyl cellulose forming a 2 wt% aqueous solution having a viscosity of at least 50 mPa-s at 20°C, the foam is more stable, but less creamy since it is difficult to create bubbles of small size during operation of a foam generator or mixer. Then for the purpose of forming a more creamy and stable foam, we mix (A) hydroxypropyl methyl cellulose forming a 2 wt% aqueous solution having a viscosity of 3 to 10 mPa-s at 20°C and (B) hydroxypropyl methyl cellulose forming a 2 wt% aqueous solution having a viscosity of 50 to 4,000 mPa-s at 20°C, more preferably in a weight ratio between 0.1/1 and 1/0.1, even more preferably between 0.3/1 and 1/0.2, and most preferably between 0.7/1 and 1/0.5. If hydroxypropyl methyl cellulose (A) having a 2 wt% solution viscosity of less than 3 mPa-s is used, foam stability may be aggravated. If hydroxypropyl methyl cellulose (A) having a 2 wt% solution viscosity of more than 10 mPa-s is used, it may be difficult to form a fine creamy foam. If hydroxypropyl methyl cellulose (B) has a 2 wt% solution viscosity of less than 50 mPa-s, foam stability may be insufficient. If hydroxypropyl methyl cellulose (B) has a 2 wt% solution viscosity of more than 4,000 mPa-s, the foam may be too viscous and give an unpleasant feel to the mouth.

It is noted that viscosity measurement is carried out, in the case of hydroxypropyl methyl cellulose (A), on a Ubbelohde viscometer according to JIS K2283-1993, and in the case of hydroxypropyl methyl cellulose (B), on a BL viscometer with No.4 rotor at 12 rpm.

The hydroxypropyl methyl cellulose or celluloses may be added in an amount of 0.2 to 2% by weight, preferably 0.55 to 1.5% by weight, and even more preferably 0.8 to 1.2% by weight of the non-fat milk (solution). Outside the range, a less amount of the cellulose may fail to form a flowing creamy foam whereas a more amount may increase viscosity and give an unpleasant feel to the mouth.

When hydroxypropyl methyl cellulose in powder form is added to cold water, particles are quickly dissolved at their surfaces and become sticky, and so gradually agglomerate into blocks. Thus it takes a time for water to penetrate from the surface into the interior of particles until particles are fully dissolved. On the other hand, in hot water above 80°C, particles are not dissolved and do not agglomerate into blocks. Then hydroxypropyl methyl cellulose may be dissolved by preheating non-fat milk at or above 80°C, admitting hydroxypropyl methyl cellulose powder thereto, agitating and mixing to fully disperse powder particles, and cooling the milk to or below 30°C.

A foam generator used for forming a creamy foam from the foamable milk composition is an equipment having a nozzle adapted to pump up and eject liquid while entrapping air. For example, a foam pump dispenser comprising a vessel, dual pistons, and dual cylinders as described in Japanese Utility Model H06-32346 may be used. Besides, any equipment capable of generating and delivering foam may be used.

The method of forming a creamy foam from the foamable milk composition may be by mixing the components of the composition, and agitating the mixture by a bladed agitator, hand mixer or the like.

When dispensed, the foamable milk composition is preferably at a temperature of 20 to 60°C, more preferably 30 to 50°C. At lower temperature, foam formation and stability may be aggravated. The reason is that since more hydroxypropyl methyl cellulose is adsorbed to oil and fat components of milk and agglomerated, less hydroxypropyl methyl cellulose is adsorbed to bubble surfaces during foaming operation, failing to stabilize the foam. In this case, the mixture is heated again preferably at 20 to 60°C, more preferably at 30 to 50°C, then it can be agitated for foaming. A flowing creamy composition as intended is obtainable in this way. At too high temperature, hydroxypropyl methyl cellulose may gel, adversely affecting foam formation and foam flow.

To the foamable milk composition, sweeteners such as sugar, synthetic sweeteners, flavoring agents, spices, and fragrant agents may be added as long as the objects of the invention are not impaired.

Examples of the item which is topped with a flowing creamy milk foam produced from the foamable milk composition include beverages such as espresso coffee for cappuccino, American coffee, instant coffee, and food items such as cookies, cheeses, breads, and cakes.

### EXAMPLE

Examples of the invention are given below by way of illustration and not by way of limitation.

### Examples 2 to 10, Reference Example and Comparative Examples 1 to 10

In a 300-ml beaker, 200 g of non-fat milk (trade name "Meiji Delicious Non-Fat Milk" by Meiji Co., Ltd.) or non-fat soymilk (trade name "Non Fat Soymilk" by West Soy) was heated at 80°C, combined with a cellulose ether, natural gum or surfactant, and stirred with a spoon. In the case of cellulose ether, the beaker was placed in an ice/water bath in a 1-L metal bowl, and the contents were stirred again with a spoon for 5 minutes at 15°C, obtaining a foamable milk composition.

The foamable milk composition thus obtained was fed into a 350-ml foam pump bottle AW350E, heated at the temperature shown in Table 1, and dispensed onto instant coffee as a topping. The foam thus formed was evaluated according to the following criteria, with the results shown in Table 1.

In all the Examples, flowing fine-size creamy foams were formed and devoid of bitter or astringent taste. In all the Comparative Examples, flowing fine-size creamy foams were formed with difficulty and the foams were unstable or tasted bitter or astringent.

### List of materials used

### 1) Cellulose ethers

Hydroxypropyl methyl cellulose (HPMC)
A1: methoxy substitution 29 wt% hydroxypropyl substitution 9 wt% 2 wt% solution viscosity @20°C 15 mPa-s Shin-Etsu Chemical Co., Ltd.
A2: methoxy substitution 29 wt% hydroxypropyl substitution 9 wt% 2 wt% solution viscosity @20°C 3 mPa-s Shin-Etsu Chemical Co., Ltd.
A3: methoxy substitution 29 wt% hydroxypropyl substitution 9 wt% 2 wt% solution viscosity @20°C 10 mPa-s Shin-Etsu Chemical Co., Ltd.
A4: methoxy substitution 25 wt% hydroxypropyl substitution 8 wt% 2 wt% solution viscosity @20°C 3 mPa-s Shin-Etsu Chemical Co., Ltd.
B1: methoxy substitution 29 wt% hydroxypropyl substitution 9 wt% 2 wt% solution viscosity @20°C 50 mPa-s Shin-Etsu Chemical Co., Ltd.
B2: methoxy substitution 29 wt% hydroxypropyl substitution 9 wt% 2 wt% solution viscosity @20°C 4,000 mPa-s Shin-Etsu Chemical Co., Ltd.
Methyl cellulose methoxy substitution 29 wt% 2 wt% solution viscosity @20°C 15 mPa-s Shin-Etsu Chemical Co., Ltd.

### 2) Natural gums

Guar gum
   2 wt% solution viscosity @20ºC 15 mPa-s Sansho Co., Ltd.
Xanthane gum
   2 wt% solution viscosity @20ºC 15 mPa-s Sansho Co., Ltd.
Gum arabic
   2 wt% solution viscosity @20ºC 15 mPa-s Sansho Co., Ltd.

### 3) Surfactants

Alginate (Kimica Corp.) Sucrose laurate (Mitsubishi-Kagaku Foods Corp.) Glycerol laurate (Taiyo Kagaku Co., Ltd.) Polyoxyethylene polyoxypropylene (NOF Corp.)

### Evaluation of foam

### 1) Fineness of foam

A: bubble size ≤ 0.4 mm
B: bubble size ≤ 0.8 mm
C: bubble size ≤ 10 mm
D: not foamed

### 2) Stability of foam (visually observed)

A: foam remains over 1 hour
B: foam remains 50 minutes
C: foam remains 40 minutes
D: foam extinguishes within 5 minutes

### 3) Taste of foam

○ no bitter or astringent taste
× : bitter and astringent taste

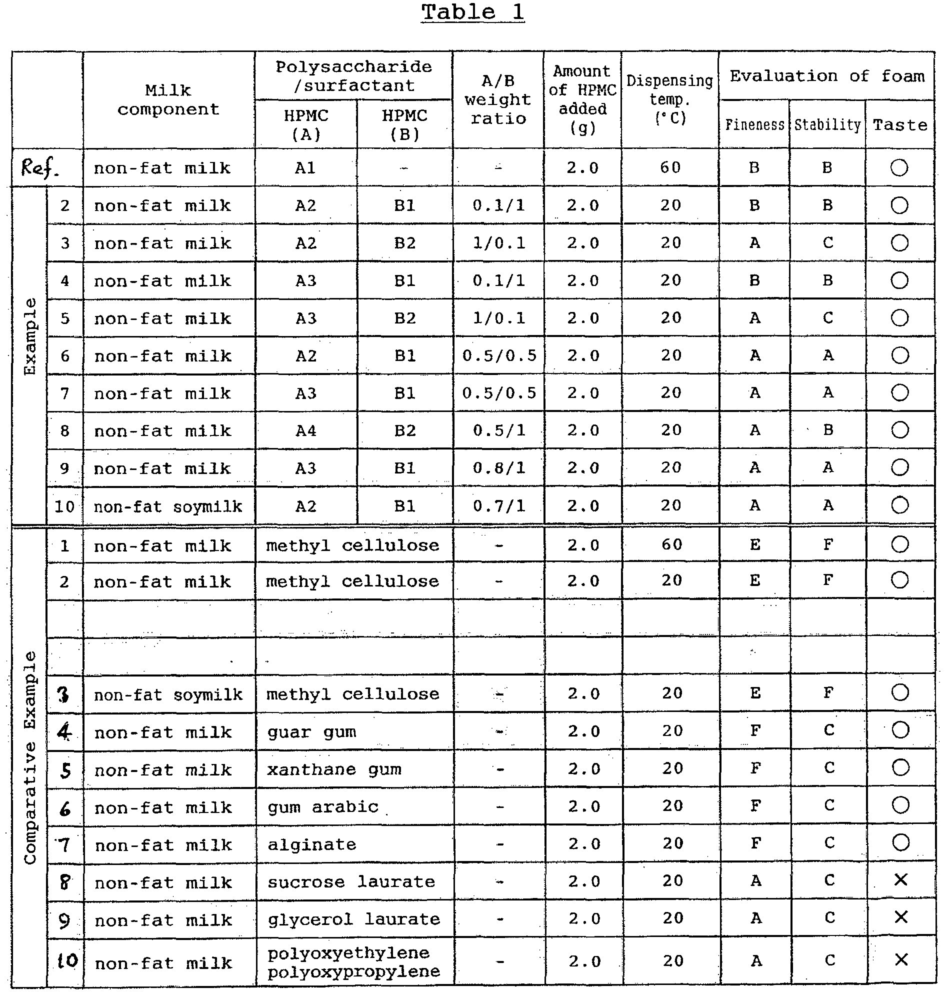

## Claims

1. A foamable milk composition consisting of non-fat milk and hydroxypropyl methyl cellulose in that the hydroxypropyl methyl cellulose is a mixture of
(A) hydroxypropyl methyl cellulose whose 2 wt% aqueous solution has a viscosity of from 3 to 10 mPa.s at 20°C, and
(B) hydroxypropyl methyl cellulose whose 2 wt% aqueous solution has a viscosity of from 50 to 4,000 mPa.s at 20°C.

2. Foamable milk composition of claim 1 comprising hydroxypropyl methyl celluloses (A) and (B) in a weight ratio between 0.1:1 and 1:0.1.

3. Foamable milk composition of claim 2 in which said weight ratio is between 0.3/1 and 1/0.2.

4. Foamable milk composition of claim 1, 2 or 3 comprising hydroxypropyl methyl cellulose at from 0.2 to 2% by weight relative to the non-fat milk.

5. Foamable milk composition of claim 4 comprising hydroxypropyl methyl cellulose at from 0.55 to 1.5% by weight relative to the non-fat milk.

6. Use of a foamable milk composition of any one of claims 1 to 5 to form a milk foam topping on a beverage or food item.

## Patentansprüche

1. Schäumbare Milchzusammensetzung, bestehend aus fettfreier Milch und Hydroxypropylmethylcellulose, wobei die Hydroxypropylmethylcellulose ein Gemisch aus Folgendem ist:
(A) Hydroxypropylmethylcellulose, von der eine 2-gew.-%ige wässrige Lösung eine Viskosität von 3 bis 10 mPa·s bei 20 °C aufweist, und
(B) Hydroxypropylmethylcellulose, von der eine 2-gew.-%ige wässrige Lösung eine Viskosität von 50 bis 4.000 mPa·s bei 20 °C aufweist.

2. Schäumbare Milchzusammensetzung nach Anspruch 1, die die Hydroxypropylmethylcellulosen (A) und (B) in einem Gewichtsverhältnis zwischen 0,1:1 und 1:0,1 umfasst.

3. Schäumbare Milchzusammensetzung nach Anspruch 2, worin das Gewichtsverhältnis zwischen 0,3:1 und 1:0,2 beträgt.

4. Schäumbare Milchzusammensetzung nach Anspruch 1, 2 oder 3, die 0,2 bis 2 Gew.-% Hydroxypropylmethylcellulose, bezogen auf die fettfreie Milch, umfasst.

5. Schäumbare Milchzusammensetzung nach Anspruch 4, die 0,55 bis 1,5 Gew.-% Hydroxypropylmethylcellulose, bezogen auf die fettfreie Milch, umfasst.

6. Verwendung einer schäumbaren Milchzusammensetzung nach einem der Ansprüche 1 bis 5 zur Bildung eines Milchschaumbelags auf einem Getränke- oder Nahrungsmittelprodukt.

## Revendications

1. Composition à base de lait pouvant mousser, constituée de lait écrémé et d'hydroxypropylméthyl-cellulose, l'hydroxypropylméthylcellulose étant un mélange
(A) d'hydroxypropylméthylcellulose dont une solution aqueuse à 2 % en poids a une viscosité de 3 à 10 mPa.s à 20°C, et
(B) d'hydroxypropylméthylcellulose dont une solution aqueuse à 2 % en poids a une viscosité de 50 à 4 000 mPa.s à 20°C.

2. Composition à base de lait pouvant mousser selon la revendication 1, comprenant les hydroxypropylméthyl-celluloses (A) et (B) en un rapport en poids compris entre 0,1/1 et 1/0,1.

3. Composition à base de lait pouvant mousser selon la revendication 2, dans laquelle ledit rapport en poids est compris entre 0,3/1 et 1/0,2.

4. Composition à base de lait pouvant mousser selon la revendication 1, 2 ou 3, comprenant de l'hydroxypropyl-méthylcellulose à raison de 0,2 à 2 % en poids par rapport au lait écrémé.

5. Composition à base de lait pouvant mousser selon la revendication 4, comprenant de l'hydroxypropylméthyl-cellulose à raison de 0,55 à 1,5 % en poids par rapport au lait écrémé.

6. Utilisation d'une composition à base de lait pouvant mousser selon l'une quelconque des revendications 1 à 5 pour former un nappage de mousse de lait sur une boisson ou un aliment.
